# EUROPEAN PATENT APPLICATION

(11) **EP 4 697 546 A1**
(43) Date of publication of application: **18.02.2026**
(21) Application number: 24194377.8
(22) Date of filing: 13.08.2024
(51) Int. Cl.: H02J 7/00, H02M 1/00

(54) **POWER DISTRIBUTION UNIT FOR OPERATING AT LEAST TWO SEPARATED VEHICLE MOUNTED LOAD UNITS AND VEHICLE COMPRISING A POWER DISTRIBUTION UNIT**

(71) Applicant: ZKW Group GmbH, 3250 Wieselburg (AT)
(72) Inventor: Reischer, Manuel, 3170 Hainfeld (AT); Graf, Harald, 2732 Würflach (AT)
(74) Representative: Patentanwaltskanzlei Matschnig & Forsthuber OG

(57) **Abstract**

The invention relates to a power distribution unit (1) for operating at least two separated vehicle mounted load units (2a, 2b), which power distribution unit (1) comprises: - a power section (11) with a first switching converter (12a), - an output circuit (14) with a group of electronic switches, wherein at least one electronic switch (15a, 15b, 15c) is assigned to each load unit (2a, 2b), - a communication section (16) connected to the power section (11) and to the output circuit (14), wherein the communication section (16) receives a first communication link (8), establishes a second communication link (17) and a third communication link (18), wherein the second communication link (17) is used to report a fault of the first switching converter (12a) and the third communication link (18) is used to control the group of electronic switches.

## Description

The invention relates to a power distribution unit for operating at least two separated vehicle mounted load units.

Over the last years the number of separate load units in a vehicle has increased with the growing number of assistance, display and lighting-functions. This leads to a wide variety of different load units which have individual requirements regarding the power supply. Apart from that, there is an ongoing change from combustion engine powered vehicles to vehicles which are powered in addition or solely by an electric battery. With this change, the number of different board voltages of vehicles increases too. Overall, these changes lead to high development and resource requirements, as the individual load units must be adapted to different supply voltages in order to be compatible with the different models in a vehicle series.

For the sake of sustainability, it is an object of the invention to overcome the drawbacks outlined above. This object is achieved by a power distribution unit of the above-mentioned kind, wherein the power distribution unit comprises
- a power input terminal configured to receive an input voltage,
- a power output terminal configured to distribute at least one output voltage to at least two load units,
- a first communication terminal configured to receive a first communication link,
- an input circuit connected to the power input terminal, which input circuit comprises an electronic filter configured to filter the input voltage and to forward the filtered input voltage as a first voltage,
- a power section connected to the input circuit, which power section comprises a first switching converter, which first switching converter is configured to receive and convert the first voltage into a second voltage,
- an output circuit connected to the power section and to the power output terminal, which output circuit comprises a group of electronic switches and which output circuit is configured to receive the second voltage and to forward the second voltage through at least two electronic switches selected from the group of electronic switches to the power output terminal, which power output terminal is configured to distribute the second voltage as a first output voltage, wherein at least one electronic switch is assigned to each load unit and each electronic switch is controllable,
- a communication section connected to the power section, to the output circuit and to the first communication terminal to receive the first communication link, wherein the communication section is configured to establish a second communication link to the power section and a third communication link to the output circuit, wherein the second communication link is used at least to report a fault of the first switching converter, and wherein the third communication link is used at least to control every single electronic switch selected from the group of electronic switches.

By implementing such a power distribution unit in a vehicle, it is possible to outsource single components from each load unit and to combine them for shared use.

In the context of this application the phrase "communication link" relates to a means of data transmission. Such a means could be, for example, a simple analog high/low signal, a modulated signal such as a PWM pulse-width modulated signal, a specific serial interface, a combination thereof, or a multiple of a single means. In this respect, the phrase "establish a communication link" refers to the establishment of the ability to receive and/or transmit information in the form of a signal regardless of the transmission medium. The transmission medium could be any known carrier of such means, e.g. a single cable, a bunch of cables, electro-magnetic waves, etc. Therefore, a connection may comprise any of the transmission medium mentioned.

A "terminal" is not limited to a single electrical connection but can also refer to a series of several electrical connections.

Further improvement can be achieved when the second communication link is additionally used to control the first switching converter.

A very wide and still simple utilization is possible if the first switching converter is configured as a buck converter, so that the second voltage is lower than the first voltage.

It is possible that the power section further comprises a second switching converter, which second switching converter is configured to receive and convert the first voltage into a third voltage, wherein the power section is either additionally connected to the power output terminal to forward the third voltage to the power output terminal or the connected output circuit is configured to receive and forward the third voltage through at least one further electronic switch selected from the group of electronic switches to the power output terminal, wherein the power output terminal is configured to distribute the third voltage as a second output voltage to at least one load unit.

Furthermore, it is possible that the second communication link is additionally used to control the second switching converter and to report a fault of the second switching converter.

It may be advantageous if the second switching converter is either configured as a boost converter, so that the third voltage is higher than the first voltage, or as buck-boost converter, so that the third voltage is higher, equal, or lower than the first voltage.

To improve the electromagnetic compatibility it is possible that the power section further comprises an LDO Low Drop-Out regulator connected to the first switching converter and configured to receive the second voltage and to provide a fourth voltage, which fourth voltage is equal or lower than the second voltage, wherein the LDO is connected to the communication section in order to provide this fourth voltage as a supply voltage for the communication section.

It is possible that the communication section is further connected to the input circuit, which input circuit further comprises an input current sensor and a controllable input switch, through which input switch either the input voltage or the first voltage is forwarded, whereby the communication section is configured to establish a fourth communication link to the input circuit, which fourth communication link is used to control the input switch and to report an input current from the input circuit to the communication section.

It is possible that the power distribution unit further comprises a second communication terminal configured to distribute a load communication link to at least one load unit, which load communication link is provided by the communication section, through which communication section the first communication link is routed through, so that the first communication link is forwarded to the second communication terminal as the load communication link.

It is possible that the output circuit further comprises an output current sensor for every single electronic switch selected from the group of electronic switches to measure the load currents drawn by the load units via the power output terminal and that the third communication link is additionally used to report at least one load current from the output circuit to the communication section.

It is possible that the communication section is configured to enable an information exchange between at least the first communication link, the second communication link and the third communication link, such that a fault of at least the first switching converter in the power section is reportable via the first communication link and such that every single electronic switch selected from the group of electronic switches in the output circuit is controllable via the first communication link.

The invention relates further to a vehicle comprising such a power distribution unit wherein the vehicle comprises at least two separated load units, which load units are operable by the power distribution unit and which load units comprise a lamp unit and/or a sensor unit.

The invention is explained in more detail below with reference to exemplary embodiments illustrated in drawings, which show in
Fig. 1 a block diagram of the power distribution unit according to the invention,
Fig. 2 a block diagram of the power distribution unit with various enhancements,
Fig. 3 schematically an integrated circuit,
Fig. 4 a simplified circuit diagram of the power distribution unit and
Fig. 5 schematically a vehicle comprising a power distribution unit.

In the following figures identical reference signs refer to identical features unless expressly depicted otherwise. The reference signs are only for informational purpose and do not delimit the scope of protection.

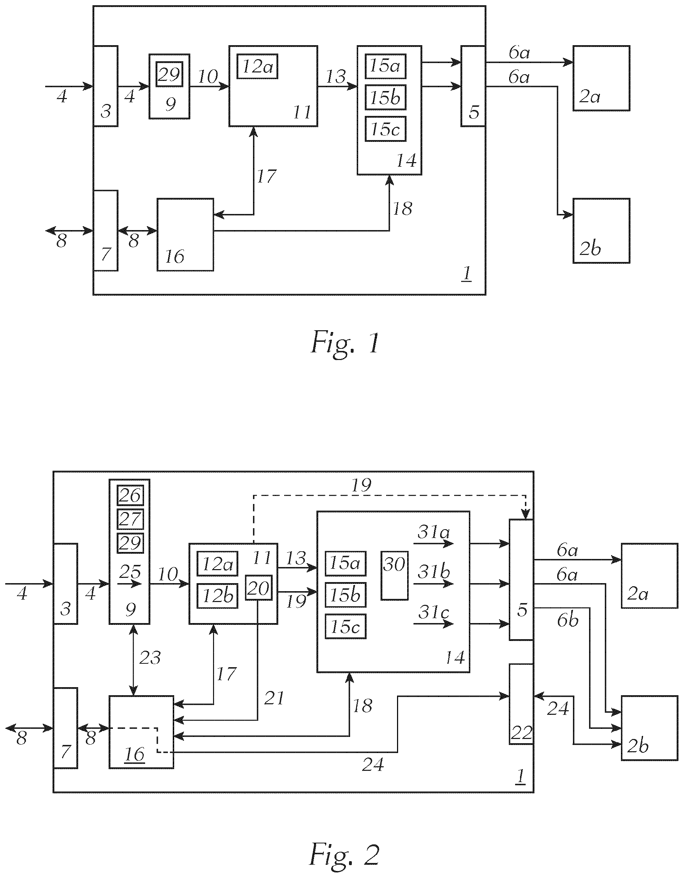

Fig. 1 shows a power distribution unit 1 for operating at least two separated vehicle mounted load units 2a, 2b. The power distribution unit 1 comprises a power input terminal 3, which is configured to receive an input voltage 4. Such an input voltage 4 can be the battery voltage or the board voltage of the vehicle 100. In combustion engine powered vehicles such input voltage 4 can be 12V or 24V. In electric vehicles which are powered in part or fully by an electric battery the input voltage 4 can be 48V. The power input terminal 3 can be a plug or a connector.

In the context of the description, a "terminal" is not limited to a single electrical connection but can also refer to a series of several electrical connections.

The power distribution unit 1 further comprises a power output terminal 5. This power output terminal 5 is configured to distribute at least one output voltage 6a, 6b to the at least two load units 2a, 2b. Consequently, the power output terminal 5 can be a plug or a connector, to allow a connection to the load units 2a, 2b.

The power distribution unit 1 is preferably a housed unit which is separated from the load units 2a, 2b and mounted in the vehicle 100. In such an arrangement the power distribution unit 1 can be connected via plugs and cables on the one hand to a battery in order to receive the input voltage 4 and on the other hand to the corresponding load units 2a, 2b to distribute at least one output voltage 6a, 6b.

The power distribution unit 1 further comprises a first communication terminal 7. This first communication terminal 7 is configured to receive a first communication link 8. Analog to the power input terminal 3 and to the power output terminal 5, the first communication terminal 7 can be a plug or connector to allow a connection to a corresponding control unit (not shown) of the vehicle 100, which control unit may be configured to establish the first communication link 8.

A communication link relates to a means of data transmission. Such a means could be, for example, a simple analog high/low signal, a modulated signal such as a PWM pulse-width modulated signal, a specific serial interface, a combination thereof, or a multiple of a single means. For the purpose of data transmission the first communication link 8 comprises preferably a CAN, an Ethernet, an UART over CAN or an UART interface. In this respect, the phrase "establish a communication link" refers to the establishment of the ability to receive and/or transmit information in the form of a signal regardless of the transmission medium. The transmission medium could be any known carrier of such means, e.g. a single cable, a bunch of cables, electro-magnetic waves, etc. Therefore, a connection may comprise any of the transmission medium mentioned.

The power distribution unit 1 further comprises an input circuit 9. The input circuit 9 is connected to the power input terminal 3 and comprises an electronic filter 29. The electronic filter 29 is configured to filter the input voltage 4 and to forward the filtered input voltage as a first voltage 10. The electronic filter 29 can be configured as a low pass filter. The input circuit 9 can comprise additionally protection elements like ESD or polarity protection components.

The power distribution unit 1 further comprises a power section 11 connected to the input circuit 9. The power section 11 comprises a first switching converter 12a. The first switching converter 12a is configured to receive and convert the first voltage 10 into a second voltage 13. The first switching converter 12a is preferably configured as a buck converter, so that the second voltage 13 is lower than the first voltage 10. Furthermore, the first switching converter 12a is preferably a voltage-regulated converter, so that the second voltage 13 is a constant voltage. The second voltage 13 can be 5V or 12V. The second voltage 13 is preferably used as an output voltage for a load unit 2a, 2b comprising a sensor unit.

The power distribution unit 1 further comprises an output circuit 14 connected to the power section 11 and to the power output terminal 5. The output circuit 14 comprises a group of electronic switches. Furthermore, the output circuit 14 is configured to receive the second voltage 13 and to forward the second voltage 13 through at least two electronic switches 15a, 15b selected from the group of electronic switches to the power output terminal 5. Consequently, the group of electronic switches comprises at least two electronic switches 15a, 15b. The power output terminal 5 is then configured to distribute the second voltage 13 as a first output voltage 6a. At least one electronic switch 15a, 15b, 15c is assigned to each load unit 2a, 2b and each electronic switch 15a, 15b, 15c is controllable. The controllability refers to the conductive state, whereby the conductive state can be at least conductive or non-conductive. Such an electronic switch 15a, 15b, 15c can be configured as a MOS power FET. In the case of a conductive electronic switch 15a, 15b, 15c the corresponding voltage is forwarded to the power output terminal 5 and in the case of a non-conductive electronic switch 15a, 15b, 15c the corresponding voltage is not forwarded to the power output terminal 5.

The power distribution unit 1 further comprises a communication section 16. The communication section 16 is connected to the power section 11, to the output circuit 14 and to the first communication terminal 7 to receive the first communication link 8. The communication section 16 is configured to establish a second communication link 17 to the power section 11 and a third communication link 18 to the output circuit 14.

The second communication link 17 is used at least to report a fault of the first switching converter 12a. The second communication link 17 can comprise for this purpose an analog high/low voltage signal for reporting a possible fault of the first switching converter 12a. For example, in the event of a fault, this signal is pulled low, e.g. 0V. Possible is an analog voltage level signal additionally or alternatively to the analog high/low voltage signal. Such an analog voltage level signal could be representative of an output value of the first switching converter 12a, such as the current or the second voltage 13. A fault can be, for example, overvoltage, overcurrent, open feedback, overtemperature or a short to ground of the first switching converter 12a.

The second communication link 17 is preferably used additionally to control the first switching converter 12a to turn the first switching converter 12a on and off or to adjust the second voltage 13. In such a case the second communication link 17 can comprise additionally a pulse width modulated signal. The modulated pulse width can be representative of the second voltage 13. For the purpose of doing both, reporting faults and controlling, the connection between the communication section 16 and the power section 11 can comprise two or more cables or one cable and a specific logic circuit which pulls the pulse width modulated signal to low in the event of a fault. Such a logic circuit can comprise a glue logic circuit.

The third communication link 18 is used at least to control every single electronic switch 15a, 15b, 15c selected from the group of electronic switches. For this purpose the second communication link 18 comprises preferably several analog high/low voltage signals, whereby each high/low voltage signal can be representative of the conductive state of a single electronic switch 15a, 15b, 15c, so that a high voltage signal, e.g. above 2V, leads to a conducting electronic switch and a low voltage signal, e.g. below 1V, leads to a non-conducting electronic switch. The connection between the communication section 16 and the output circuit 14 can comprise a corresponding number of cables to provide individual signals for each electronic switch 15a, 15b, 15c. Alternatively the connection between the communication section 16 and the output circuit 14 comprise a single cable which is used in a multiplexed manner to provide individual signals for each electronic switch 15a, 15b, 15c.

Fig. 2 shows the power distribution unit 1 with various enhancements. Compared to the power distribution unit 1 of Fig. 1, additional elements are shown. Although these additional elements and their functions are shown and described in conjunction with a single figure, it is clear that these elements can be implemented or combined separately depending on the requirements on the power distribution unit 1.

For example, as shown, the power section 11 can further comprise a second switching converter 12b. The second switching converter 12b is configured to receive and convert the first voltage 10 into a third voltage 19. The power section 11 is either additionally connected to the power output terminal 5 to forward the third voltage 19 to the power output terminal 5 or the connected output circuit 14 is configured to receive and forward the third voltage 19 through at least one further electronic switch 15c selected from the group of electronic switches to the power output terminal 5. In both cases the power output terminal 5 is configured to distribute the third voltage 19 as a second output voltage 6b to at least one load unit 2a, 2b. Preferably, the third voltage 19 differs from the second voltage 13, consequently the first output voltage 6a differs preferably from the second output voltage 6b. As shown, the second output voltage 6b is distributed to one load unit 6b. In the case that the third voltage 19 is forwarded through at least one further electronic switch 15c, two electronic switches 15b, 15c are assigned to the one load unit 6b. It is possible that other load units receive the third voltage 19 as second output voltage 6b, too, wherein for this purpose additional electronic switches can be selected from the group of electronic switches.

Similar to the first switching converter 12a, the second communication link 17 can be used additionally to control the second switching converter 12b and to report a fault of the second switching converter 12b. For this purpose, the connection between the communication section 16 and the power section 11 can comprise several cables to control and report faults from both, the first switching converter 12a and the second switching converter 12b. Alternative connections, comprising only a single cable which is used in a multiplexed manner or corresponding logic circuits for shared used, are possible too. In order to control the second switching converter the second communication link 17 can comprise additionally a pulse width modulated signal. This modulated pulse width can be representative of the third voltage 19.

The second switching converter 12b is preferably configured as a boost converter, so that the third voltage 19 is higher than the first voltage 10. It is possible that the second switching converter 12b is configured as a buck-boost converter, e.g. as a SEPI converter, so that the third voltage 19 is higher, equal, or lower than the first voltage 10. Furthermore, the second switching converter 12b is preferably a voltage-regulated converter, so that the third voltage 19 is a constant voltage. The third voltage 19 can be 48V, 24V or 12V. The third voltage 19 is preferably used for a load unit 2a, 2b comprising a lamp unit.

As shown, the power distribution unit 1 can comprise an LDO 20 (Low Drop-Out regulator). This LDO 20 is connected to the first switching converter 12a and configured to receive the second voltage 13 to provide, based on the second voltage 13, a fourth voltage 21. The fourth voltage 21 is equal or lower than the second voltage 13. The LDO 20 is further connected to the communication section 16 in order to provide this fourth voltage 21 as a supply voltage for the communication section 16. This allows a suitable power supply to the EMI-sensitive communication section 16 within the power distribution unit 1. The fourth voltage 21 can be 5V.

Furthermore, the communication section 16 can be, as shown, connected to the input circuit 9. The input circuit 9 can comprise an input current sensor 26 and a controllable input switch 27. Controllable means, similar to the controllable electronic switches 15a, 15b, 15c, that the conductive state of the input switch 27 can be changed from conductive to non-conductive or vice versa. The input switch 27 may be configured as a MOS power FET. Either the input voltage 4 or the first voltage 10 is forwarded through this input switch 27. This could depend on the position of the input switch 27 before or after the electronic filter 29. In the case of a conductive input switch 27 the corresponding voltage, the input voltage 4 or the first voltage 10, is forwarded and in the case of a non-conductive input switch 27 the corresponding voltage is not forwarded, such that the first switching converter 12a and, if applicable, the second switching converter 12b are or are not capable of receiving the first voltage 10.

The communication section 16 can be additionally configured to establish a fourth communication link 23 to the input circuit 9. This fourth communication link 23 can then be used to control the input switch 27 and to report an input current 25 from the input circuit 9 to the communication section 16. The input current 25 can represent essentially the total input current of the power distribution unit 1 that is used to supply all the connected load units 2a, 2b. For reporting the input current 25 the fourth communication link 23 may comprise an analog voltage level signal, which is proportional to the input current 25. For controlling the input switch 27, the fourth communication link 23 may comprise an analog high/low voltage signal.

As shown, the power distribution unit 1 can comprise a second communication terminal 22. This second communication terminal 22 can be configured to distribute a load communication link 24 to at least one load unit 2a, 2b. Consequently, the second communication terminal 22 can be a plug or a connector, to allow a connection to the load units 2a, 2b. The load communication link 24 may be provided by the communication section 16, through which communication section 16 the first communication link 8 is routed through, so that the first communication link 8 is forwarded to the second communication terminal 22 as the load communication link 24. This makes it possible to communicate with the load units 2a, 2b through the power distribution unit 1. This can be advantageously especially if a load unit 2a, 2b comprise a sensor unit or a lamp unit. The load communication link 24 may comprise, similar to the first communication link 8, a CAN, an Ethernet, an UART over CAN or an UART interface.

The output circuit 14 may also comprise an output current sensor 30 for every single electronic switch 15a, 15b, 15c selected from the group of electronic switches. It could be a single output current sensor 30 used in multiplexed manner or individual output current sensors to measure the load currents 31a, 31b, 31c drawn through every single electronic switch 15a, 15b, 15c by the load units 2a, 2b via the power output terminal 5. In this case the third communication link 18 is additionally used to report at least one load current 31a, 31b, 31c from the output circuit 14 to the communication section 16. For reporting the load currents 31a, 31b, 31c the third communication link 18 may comprise three analog voltage level signals, which are each proportional to the corresponding load current 31a, 31b, 31c.

The communication section 16 can be configured to enable an information exchange between at least the first communication link 8, the second communication link 17 and the third communication link 18. Preferably the communication section 16 may be configured to enable an information exchange between all communication links, including the fourth communication link 23 and the load communication link 24 if those are established by the communication section 16. This information exchange may allow that a previously described fault of at least one switching converter 12a, 12b in the power section 11 is reportable via the first communication link 8 and that every single electronic switch 15a, 15b, 15c selected from the group of electronic switches in the output circuit 14 is controllable via the first communication link 8.

The communication section 16 may comprise a microcontroller in order to establish the first communication link 8, the second communication link 17, the third communication link 18, the fourth communication link 23 and the load communication link 24. In addition to that, such a microcontroller could enable the information exchange between the first communication link 8, the second communication link 17, the third communication link 18, and if established additionally between the first communication link 8, the fourth communication link 23 and the load communication link 24.

Preferably, the communication section 16 does not comprise a microcontroller. Particularly preferably the entire power distribution unit 1 does not comprise a microcontroller. Instead, the communication section 16 can comprise an integrated circuit 32, which is configured to store information in registers. The integrated circuit 32 may comprise a number of input/output ports which are associated with individual registers of the integrated circuit 32. These registers can then be allocated by connecting the corresponding input/output port.

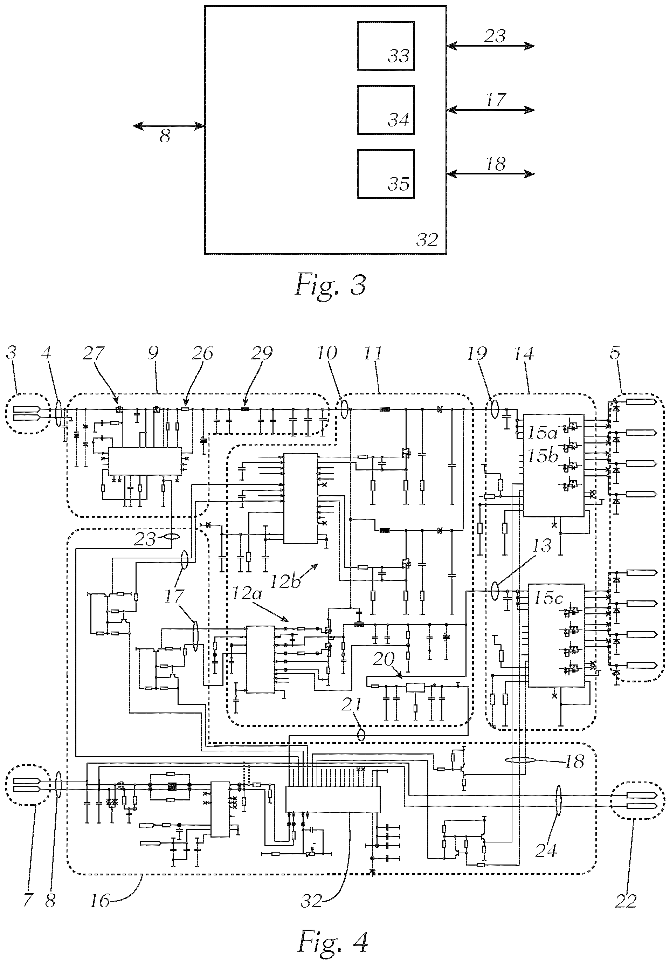

Fig. 3 shows schematically such an integrated circuit 32.

The integrated circuit 32 may comprise input circuit registers 33, which are allocated by the connection between the communication section 16 and the input circuit 9. In this case and when the fourth communication link 23 is established, the stored information in the input circuit registers 33 is representative of the conductive state of the input switch 27 and of the input current 25.

The integrated circuit 32 may comprise power section registers 34, which are allocated by the connection between the communication section 16 and the power section 11. In this case and when the second communication link 17 is established, the stored information in the power section registers 34 is representative of a fault condition of the first switching converter 12a. Additionally the stored information in the power section registers 34 may be representative of the second voltage 13, e.g. by describing a specific pulse width of a pulse width modulated signal. Additionally, the stored information in the power section registers 34 may be representative of a fault condition of the second switching converter 12b and/or representative of the third voltage 19.

The integrated circuit 32 may comprise output circuit registers 35, which are allocated by the connection between the communication section 16 and the output circuit 14. In this case and when the third communication link 18 is established, the stored information in the output circuit registers 35 is representative of the conductive state of every single electronic switch 15a, 15b, 15c selected from the group of electronic switches. Additionally the stored information in the output circuit registers 35 may be representative of the load currents 31a, 31b.

The integrated circuit 32 may further be configured to read and write information from and into the power section registers 34 via the first communication link 8 as well as from and into the output circuit registers 35 via the first communication link 8. Due to this it is possible to exchange information between at least the first communication link 8, the second communication link 17 and the third communication link 18 without the need of a microcontroller. Additionally the integrated circuit 32 may further be configured to read and write information from and into the input circuit registers 33 via the first communication link 8 to exchange information additionally between the first communication link 8 and the fourth communication link 23.

Fig. 4 shows a simplified circuit diagram of a part of the power distribution unit 1 with the corresponding reference signs. This is supposed to represent a feasible circuit diagram of a part of the power distribution unit 1 without limiting the invention to it.

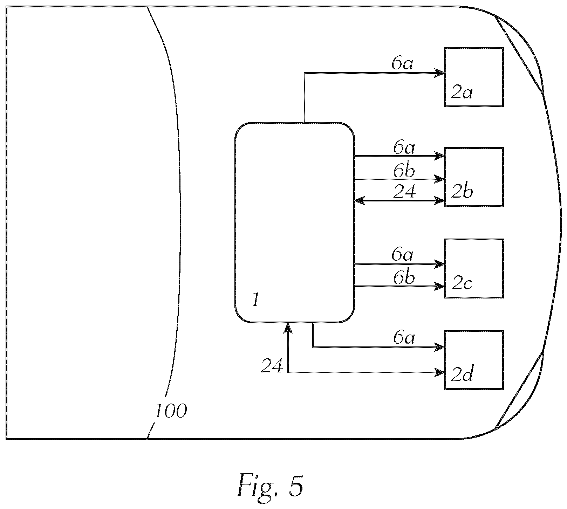

Fig. 5 shows schematically a vehicle 100. The vehicle 100 comprises the previously described power distribution unit 1. The vehicle 100 further comprises at least two separate load units 2a, 2b. The configuration shown comprises exemplary further load units 2c, 2d, which also receive the first output voltage 6a, partly also the second output voltage 6b and partly also the load communication link 24. For a better overview the single elements of the power distribution unit 1 are not shown but can be identified accordingly in comparison with Fig. 1 or Fig. 2. The output circuit 14 of the power distribution unit 1 is in this case configured to receive the second voltage 13 and to forward the second voltage 13 through four electronic switches selected from the group of electronic switches to the power output terminal 5, which distributes the second voltage 13 as the first output voltage 6a to the corresponding load units 2a, 2b, 2c, 2d. Additionally the output circuit 14 may be configured to receive the third voltage 19 and to forward the third voltage 19 through further electronic switches selected from the group of electronic switches to the power output terminal 5, which distributes the third voltage 19 as the second output voltage 6b to the corresponding load units 2b, 2c. The load units 2a, 2b, 2c, 2d may comprise a lamp unit such as a headlamp, a logo illumination, a ground projection unit, a side marker, a turn indicator, a fog lamp, or a rear lamp. The load units 2a, 2b, 2c, 2d may further or alternatively comprise a sensor unit such as a radar, lidar or a camera. The power distribution unit 1 is preferably located in the vicinity of the corresponding load units 2a, 2b, 2c, 2d. All shown load units 2a, 2b, 2c, 2d are operated by the power distribution unit 1, eliminating the need for individual power supply units.

The invention is not limited to the embodiments shown but is defined by the entire scope of protection of the claims. Individual aspects of the invention or of the embodiments can also be taken up and combined with one another. Any reference signs in the claims are exemplary and serve only the purpose to allow easier review without restricting the claims.

### LIST OF REFERENCE SIGNS

- 1: power distribution unit
- 2a, 2b: load units
- 3: power input terminal
- 4: input voltage
- 5: power output terminal
- 6a: first output voltage
- 6b: second output voltage
- 7: first communication terminal
- 8: first communication link
- 9: input circuit
- 10: first voltage
- 11: power section
- 12a: first switching converter
- 12b: second switching converter
- 13: second voltage
- 14: output circuit
- 15a, 15b, 15c: electronic switches
- 16: communication section
- 17: second communication link
- 18: third communication link
- 19: third voltage
- 20: LDO
- 21: fourth voltage
- 22: second communication terminal
- 23: fourth communication link
- 24: load communication link
- 25: input current
- 26: input current sensor
- 27: input switch
- 29: electronic filter
- 30: output current sensor
- 31a, 31b, 31c: load currents
- 32: integrated circuit
- 33: input circuit registers
- 34: power section registers
- 35: output circuit registers
- 100: vehicle

## Claims

1. power distribution unit (1) for operating at least two separated vehicle mounted load units (2a, 2b), which power distribution unit (1) is **characterized in that** it comprises
- a power input terminal (3) configured to receive an input voltage (4),
- a power output terminal (5) configured to distribute at least one output voltage (6a, 6b) to at least two load units (2a, 2b),
- a first communication terminal (7) configured to receive a first communication link (8),
- an input circuit (9) connected to the power input terminal (3), which input circuit (9) comprises an electronic filter (29) configured to filter the input voltage (4) and to forward the filtered input voltage as a first voltage (10),
- a power section (11) connected to the input circuit (9), which power section (11) comprises a first switching converter (12a), which first switching converter (12a) is configured to receive and convert the first voltage (10) into a second voltage (13),
- an output circuit (14) connected to the power section (11) and to the power output terminal (5), which output circuit (14) comprises a group of electronic switches and which output circuit (14) is configured to receive the second voltage (13) and to forward the second voltage (13) through at least two electronic switches (15a, 15b) selected from the group of electronic switches to the power output terminal (5), which power output terminal (5) is configured to distribute the second voltage (13) as a first output voltage (6a), wherein at least one electronic switch (15a, 15b, 15c) is assigned to each load unit (2a, 2b) and each electronic switch (15a, 15b, 15c) is controllable,
- a communication section (16) connected to the power section (11), to the output circuit (14) and to the first communication terminal (7) to receive the first communication link (8), wherein the communication section (16) is configured to establish a second communication link (17) to the power section (11) and a third communication link (18) to the output circuit (14), wherein the second communication link (17) is used at least to report a fault of the first switching converter (12a), and wherein the third communication link (18) is used at least to control every single electronic switch (15a, 15b, 15c) selected from the group of electronic switches.

2. power distribution unit (1) according to claim 1, wherein the second communication link (17) is additionally used to control the first switching converter (12a).

3. power distribution unit (1) according to any of the claims 1 or 2, wherein the first switching converter (12a) is configured as a buck converter, so that the second voltage (13) is lower than the first voltage (10).

4. power distribution unit (1) according to any of the claims 1 to 3, wherein the power section (11) further comprises a second switching converter (12b), which second switching converter (12b) is configured to receive and convert the first voltage (10) into a third voltage (19), wherein the power section (11) is either additionally connected to the power output terminal (5) to forward the third voltage (19) to the power output terminal (5) or the connected output circuit (14) is configured to receive and forward the third voltage (19) through at least one further electronic switch (15c) selected from the group of electronic switches to the power output terminal (5), wherein the power output terminal (5) is configured to distribute the third voltage (19) as a second output voltage (6b) to at least one load unit (2a, 2b).

5. power distribution unit (1) according to claim 4, wherein the second communication link (17) is additionally used to control the second switching converter (12b) and to report a fault of the second switching converter (12b).

6. power distribution unit (1) according to any of the claims 4 or 5, wherein the second switching converter (12b) is either configured as a boost converter, so that the third voltage (19) is higher than the first (10) voltage, or as buck-boost converter, so that the third voltage (19) is higher, equal, or lower than the first voltage (10).

7. power distribution unit (1) according to any of the claims 1 to 6, wherein the power section (11) further comprises an LDO (20) connected to the first switching converter (12a) and configured to receive the second voltage (13) and to provide a fourth voltage (21), which fourth voltage (21) is equal or lower than the second voltage (13), wherein the LDO (20) is connected to the communication section (16) in order to provide this fourth voltage (21) as a supply voltage for the communication section (16).

8. power distribution unit (1) according to any of the claims 1 to 7, wherein the communication section (16) is further connected to the input circuit (9), which input circuit (9) further comprises an input current sensor (26) and a controllable input switch (27), through which input switch (27) either the input voltage (4) or the first voltage (10) is forwarded, whereby the communication section (16) is configured to establish a fourth communication link (23) to the input circuit (9), which fourth communication link (23) is used to control the input switch (27) and to report an input current (25) from the input circuit (9) to the communication section (16).

9. power distribution unit (1) according to any of the claims 1 to 8, wherein the power distribution unit (1) further comprises a second communication terminal (22) configured to distribute a load communication link (24) to at least one load unit (2a, 2b), which load communication link (24) is provided by the communication section (16), through which communication section (16) the first communication link (8) is routed through, so that the first communication link (8) is forwarded to the second communication terminal (22) as the load communication link (24).

10. power distribution unit (1) according to any of the claims 1 to 9, wherein the output circuit (14) further comprises an output current sensor (30) for every single electronic switch (15a, 15b, 15c) selected from the group of electronic switches to measure the load currents (31a, 31b) drawn by the load units (2a, 2b) via the power output terminal (5) and wherein the third communication link (18) is additionally used to report at least one load current (31a, 31b, 31c) from the output circuit (14) to the communication section (16).

11. power distribution unit (1) according to any of the claims 1 to 10, wherein communication section (16) is configured to enable an information exchange between at least the first communication link (8), the second communication link (17) and the third communication link (18), such that a fault of at least the first switching converter (12a) in the power section (11) is reportable via the first communication link (8) and such that every single electronic switch (15a, 15b, 15c) selected from the group of electronic switches in the output circuit (14) is controllable via the first communication link (8).

12. Vehicle (100) comprising a power distribution unit (1) according to any of the claims 1 to 11, wherein the vehicle (100) comprises at least two separated load units (2a, 2b), which load units (2a, 2b) are operable by the power distribution unit (1) and which load units (2a, 2b) comprise a lamp unit and/or a sensor unit.
